# EUROPÄISCHE PATENTSCHRIFT

(11) **EP 1 925 830 B1**
(45) Veröffentlichungstag und Bekanntmachung des Hinweises auf die Patenterteilung: **22.12.2010**
(21) Anmeldenummer: 07117860.2
(22) Anmeldetag: 04.10.2007
(51) Int. Cl.: F16C 11/04, F16C 19/38, F16M 11/08

(54) **Wälzlager**
Roller bearing
Palier à roulement

(30) Priorität: 24.11.2006 DE 102006055581
(43) Veröffentlichungstag der Anmeldung: 28.05.2008
(73) Patentinhaber: Schaeffler Technologies GmbH & Co. KG, 91074 Herzogenaurach (DE)
(72) Erfinder: Stölzle, Jürgen, 73441,Bopfingen (DE)

(56) Entgegenhaltungen:
- WO-A-01/45627
- FR-A- 2 549 174
- FR-A- 2 884 893

## Beschreibung

### Gebiet der Erfindung

Die Erfindung betrifft ein Wälzlager nach den oberbegriffsbildenden Merkmalen des Patentanspruchs 1, welches insbesondere vorteilhaft im medizinischen Bereich als Drehverbindung für die Schwenkarme eines Deckenstatives für einen Operationssaal anwendbar ist.

### Hintergrund der Erfindung

Wälzlager-Drehverbindungen sind seit längerem allgemein bekannt und werden gemäß dem Fachbuch "Die Wälzlagerpraxis", Vereinigte Fachverlage GmbH, Mainz 1995 als Schwenklager für die Abstützung von Baggern, Kränen oder im Fahrzeugbau für Gelenkbusse bzw. Straßenbahnen eingesetzt, d.h., in Einsatzgebieten, bei denen bei begrenztem Einbauraum hohe Belastungen auftreten und die eine hohe Betriebssicherheit verlangen. Diese Drehverbindungen können Axialkräfte, Radialkräfte und Kippmomente aufnehmen und werden darüber hinaus auch in der Medizintechnik, im Roboterbau oder in der Wehrtechnik eingestzt. Die Schwenklager werden dabei als Vierpunktlager ausgebildet, die insbesondere zur Aufnahme von Kippkräften bei kleinem Querschnitt gut geeignet sind. Gelenke von Industrierobotern und andere Lagerstellen, die die Tragfähigkeit und die Steifigkeit von Kugellagern überfordern, rüstet man dagegen zumeist mit Kreuzrollenlagern aus, die einen Kranz von Rollen mit annähernd quadratischem Querschnitt aufweisen, die abwechselnd mit versetzter Achse auf den Laufbahnen abrollen. Derartige Schwenklager sind beispielhaft in der FR 2 549 174 und in der DE-OS 1 525 140 vorbeschrieben.

Wie bereits erwähnt, werden solche Drehverbindungen auch im medizinischen Bereich eingesetzt. Sie werden in sogenannten Deckenstativen verwendet, wie beispielsweise aus der DE 36 27 517 A1 hervorgeht. In diesem Zusammenhang ist es allgemein bekannt, dass beispielsweise wegen der Übertragung von Daten anhand elektrischer Leitungen oder wegen der Übertragung von Flüssigkeiten/Gasen durch Schläuche die Winkelverstellung zwischen den beiden sich drehenden Teilen begrenzt werden muss. Dies ist erforderlich, um eine Beschädigung der Drehverbindung durch ein Verdrehen der elektrischen Leitung oder der Schläuche zu verhindern. So ist beispielsweise aus der FR 2 693 102 ein Deckenstativ bekannt, dessen Figur 2 erkennen lässt, dass die Zuleitungen für medizinische Gase oder Fluide mittels Rohrleitungen durch Verdrillen nicht beschädigt werden dürfen.

Ein weiteres Deckenstativ für einen Operationssaal ist aus der FR 2 884 893 bekannt. Bei diesem Deckenstativ ist zwischen einem Oberteil und einem Unterteil ein Wälzlager, insbesondere eine Drehverbindung, angeordnet ist, das aus einem Lagerinnenring und einem Lageraußenring und zwischen diesen Lagerringen auf zugehörigen Laufbahnen abrollenden Wälzkörpern besteht. Zur Begrenzung des Drehwinkels zwischen Ober- und Unterteil des Schwenkarms sind darüber hinaus Anschlagmittel vorgesehen, die an der Anschlusskonstruktion der Drehverbindung angeordnet und in Form eines zwischen zwei nasenartigen Endanschlägen angeordneten Anschlagstiftes ausgebildet sind.

Darüber hinaus ist durch die WO 01/45627 A1 ein Deckenstativ für ein Operationssaalsystem bekannt, bei dem an einer zentralen Deckensäule neben den Naben für andere medizinische Gerätschaften auch eine Monitornabe drehbar gelagert ist, an der zwei Schwenkarmanordnungen zur Halterung von zwei Monitoren schwenkbar befestigt sind. Zu diesem Zweck weist die Monitornabe zwei sich um 180° gegenüberliegend angeordnete untere Schwenkgelenke auf, auf die zwei jeweils an den Enden der Schwenkarmanordnungen angeordnete obere Schwenkgelenke aufgesetzt werden. Das untere Schwenkgelenk wird dabei jeweils mit dem oberen Schwenkgelenk über eine Schraube verbunden, wobei die Verschwenkbarkeit beider Schwenkgelenke zueinander jeweils über ein Axialnadellager gewährleistet wird, welches in eine Ringschulter im unteren Schwenkgelenk eingesetzt ist und auf dessen oberer Druckscheibe das obere Schwenkgelenk mit seiner unteren Ringfläche aufliegt. Zur Vermeidung von Beschädigungen des durch Gelenkanordnung durchgeführten Kabels beim Verschwenken der Monitore weisen die Schwenkgelenke darüber hinaus eine Schwenkbegrenzung zueinander auf, die durch eine in der unteren Ringfläche im oberen Schwenkgelenk angeordnete bogenförmige Nut und einen neben der Ringschulter im unteren Schwenkgelenk angeordneten und in die Nut im oberen Schwenkgelenk eingreifenden bogenförmigen Anschlag gebildet wird.

Nachteilig bei allen vorbeschriebenen Drehverbindungen für Deckenstative ist jedoch, dass deren mechanische Drehwinkelbegrenzer keine Verdrehung der Lagerringe über 360° hinaus erlauben, was aber zur uneingeschränkten Handhabbarkeit des Deckenstatives unbedingt erforderlich ist.

### Aufgabe der Erfindung

Ausgehend von den Nachteilen des bekannten Standes der Technik liegt daher der Erfindung die Aufgabe zugrunde, für ein Wälzlager eine Begrenzung von dessen Drehwinkel zu entwickeln, die insbesondere ein Verdrehen der beiden Teile gegeneinander auch über einen Winkel von 360° hinaus erlaubt.

### Beschreibung der Erfindung

Erfindungsgemäß wird diese Aufgabe bei einem Wälzlager nach dem Oberbegriff des Anspruchs 1 derart gelöst, dass das Anschlagmittel zur Begrenzung von dessen Drehwinkel durch eine Kurvensteuerung gebildet wird, die aus einer in einem Lagerring angeordneten Steuernut und aus einem im anderen Lagerring in einer Ausnehmung angeordneten Führungselement besteht, welches in der Steuernut geführt ist.

Durch das Integrieren einer an sich bekannten Kurvensteuerung in ein Wälzlager wird erreicht, dass ein Anschlagsystem für Drehwinkel >360° geschaffen ist. Die Länge der Steuernut definiert dabei den Winkelbereich, in dem die Drehverbindung bewegt werden kann. Dabei existieren zwei Anschläge, zwischen denen ein Verschwenken möglich ist, wobei der erste und der zweite Anschlag jeweils durch Beginn und Ende der Steuernut bestimmt sind. Beide Lagerringe sind durch ein Führungselement miteinander verbunden, das einerseits in der Steuernut des einen Lagerrings und andererseits in einer zugehörigen Ausnehmung des anderen Lagerringes geführt ist. Auf diese Weise ist ein formschlüssiger Zwangslauf beider Lagerringe zueinander realisiert, wobei der Schwenkwinkel beider Lagerringe zueinander durch die räumliche Ausdehnung der Führungsnut bestimmt ist und jedem konkreten Einzelfall individuell anpassbar ist.

Bevorzugte Ausgestaltungen und vorteilhafte Weiterbildungen des erfindungsgemäß ausgebildeten Wälzlagers werden in den Unteransprüchen beschrieben.

Danach ist es nach Anspruch 2 vorgesehen, dass das Führungselement als ein Gleitschuh ausgebildet ist, der aus einer Gleitbuchse und einem daraus hervorstehenden Stift besteht.

Gemäß den Ansprüchen 3 und 4 zeichnet sich das erfindungsgemäß ausgebildete Wälzlager desweiteren dadurch aus, dass die Steuernut im äußeren Lagerring angeordnet sowie spiralförmig ausgebildet ist und in der Steuernut die Gleitbuchse geführt ist, während die Ausnehmung im inneren Lagerring angeordnet sowie als radiales Langloch ausgebildet ist und in der Ausnehmung der Stift geführt ist. Dabei hat es sich nach Anspruch 5 als zweckmäßig erwiesen, dass zwischen den Lagerringen eine diese trennende Ebene gebildet ist, in deren Bereich die Kurvensteuerung angeordnet ist und die, wie in Anspruch 6 beschrieben, außerhalb des Laufbahnbereiches der Lagerringe angeordnet ist.

Eine besonders vorteilhafte Ausgestaltungsvariante des erfindungsgemäß ausgebildeten en Wälzlagers ist in den Ansprüchen 7, 8 und 9 beschrieben.

Danach ist gemäß Anspruch 7 vorgesehen, dass die Wälzkörper durch Lagernadeln zweier entgegengerichteter Axialschrägnadellager gebildet sind, die Laufscheiben aufweisen, wobei ein Schnittpunkt verlängerter Drehachsen der Lagernadeln im inneren Lagerring oder im äußeren Lagerring liegt. Gegenüber den bekannten Drehverbindungen, die in beschriebener Weise bevorzugt als Vierpunktlager oder Kreuzrollenlager ausgeführt sind, ist bei Verwendung von zwei Schrägnadellagern bei gleicher oder höherer Tragzahl die Fertigung wesentlich kostengünstiger.

Nach einem weiteren Merkmal der Erfindung gemäß Anspruch 8 soll der äußere Lagerring an seiner inneren Mantelfläche einen in Richtung des inneren Lagerrings weisenden Vorsprung besitzen, der Anlageflächen für die beiden Axialschrägnadellager bildet. Aufgrund dieser geometrischen Gestaltung lässt sich dieser äußere Lagerring in besonders einfacher Weise fertigen.

Als vorteilhafte Ausgestaltung des erfindungsgemäß ausgebildeten Wälzlagers wird es durch Anspruch 9 noch vorgeschlagen, dass der innere Lagerring an seiner äußeren Mantelfläche eine Ausnehmung zur Aufnahme der Axialschrägnadellager aufweist, in die ein Gewindering einschraubbar ist. Durch diesen Gewindering kann in einfacher Art und Weise die gewünschte Vorspannung einer solchen Drehverbindung eingestellt werden.

Nach Anspruch 10 ist es ein weiteres Merkmal des erfindungsgemäß ausgebildeten Wälzlagers, dass die Lagerringe aus Aluminium gefertigt sind. Dadurch ist sichergestellt, dass eine Wälzlager-Drehverbindung in Leichtbauweise realisiert ist.

Eine zweckmäßige Weiterbildung des erfindungsgemäß ausgebildeten Wälzlagers ist es nach Anspruch 11 desweiteren, dass die Laufscheiben und/oder der Stift des Führungselementes einem Härteprozess unterworfen sind. Auf diese Weise wird die Lebensdauer der Wälzlager-Drehverbindung erhöht.

Schließlich ist nach einem letzten Merkmal der Erfindung nach Anspruch 12 vorgesehen, dass ein solches Wälzlager in einem Deckenstativ für medizinische Geräte einsetzbar ist.

### Kurze Beschreibung der Zeichnungen

Eine bevorzugte Ausführungsform des erfindungsgemäß ausgebildeten Wälzlagers wird nachfolgend unter Bezugnahme auf die beigefügten Zeichnungen näher erläutert. Dabei zeigen:
- Figur 1: einen Längsschnitt durch eine erfindungsgemäße Wälzlager- Drehverbindung,
- Figur 1a: eine vergrößerte Darstellung der erfindungsgemäßen Wälzla- ger-Drehverbindung im Bereich des Führungselements,
- Figur 2: eine perspektivische Darstellung der erfindungsgemäßen Wälz- lager-Drehverbindung und
- Figur 3: eine Draufsicht auf den Lageraußenring der Wälzlager- Drehverbindung im Bereich der Steuernut.

### Ausführliche Beschreibung der Zeichnungen

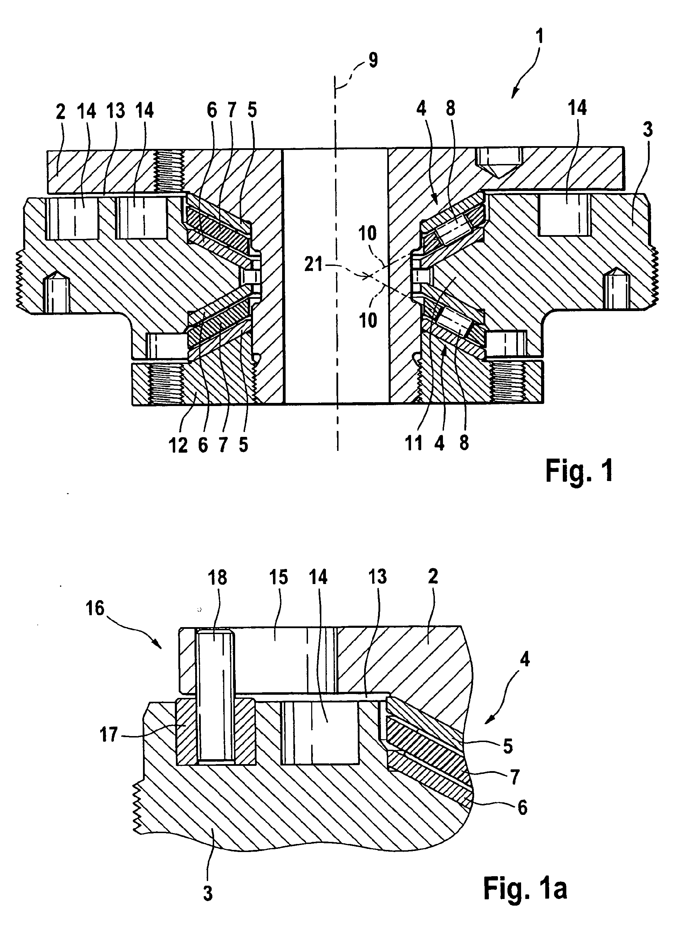

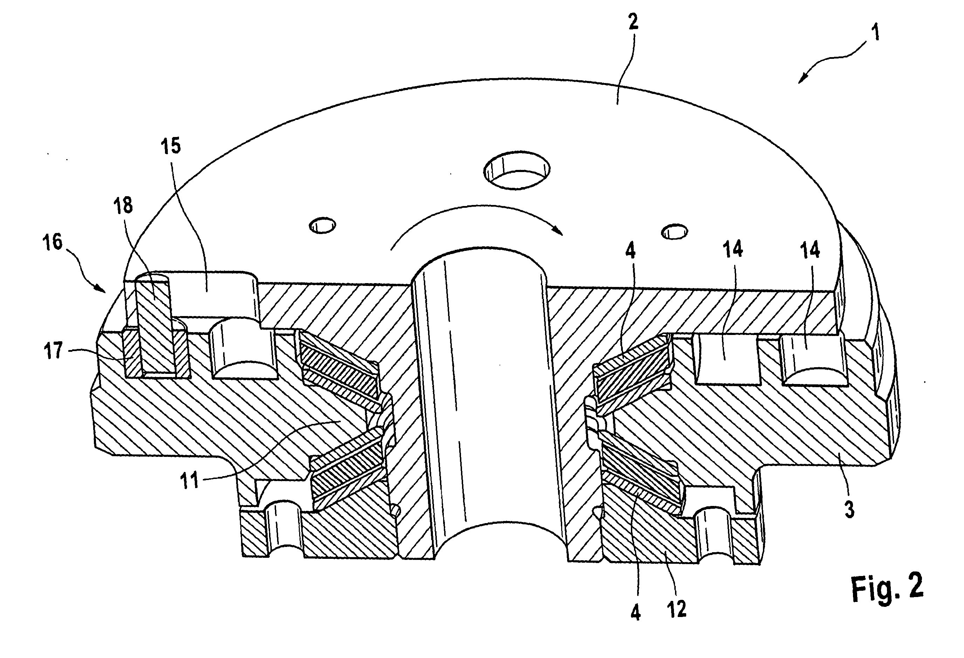

Die in den Figuren 1 und 2 dargestellte und mit 1 bezeichnete Drehverbindung besteht aus dem inneren Lagerring 2 und dem äußeren Lagerring 3, zwischen denen zwei einander entgegengerichtete Axialschrägnadellager 4 angeordnet sind. Diese weisen je eine Laufscheibe 5, 6 auf, zwischen denen auf zugehörigen nicht näher bezeichneten Laufbahnen in je einem Käfig 7 geführte Lagernadeln 8 um die Lagerachse 9 abrollen. Im vorliegenden Ausführungsbeispiel sind die Axialschrägnadellager 4 so ausgerichtet, dass sich die verlängerten Drehachsen 10 der Lagernadeln 8 im inneren Lagerring 2 im Punkt 21 schneiden. Der äußere Lagerring 3 weist den V-förmigen Vorsprung 11 auf, der als Anlagefläche für die Laufscheiben 6 dient. Zur Drehverbindung 1 gehört weiter der Gewindering 12, der mit seinem nicht bezeichneten Innengewinde auf den inneren Lagerring 2 aufschraubbar ist, so dass auf einfache Weise die beiden Axialschrägnadellager 4 unter Vorspannung gesetzt werden können. Es liegt auf der Hand, dass entsprechend dem Vorsprung 11 des äußeren Lagerringes 3 die nicht näher bezeichnete Ausnehmung des inneren Lagerringes 2 zur Aufnahme der beiden Axialschrägnadellager 4 und des Gewinderinges 12 so ausgebildet werden muss, dass sie zueinander passen.

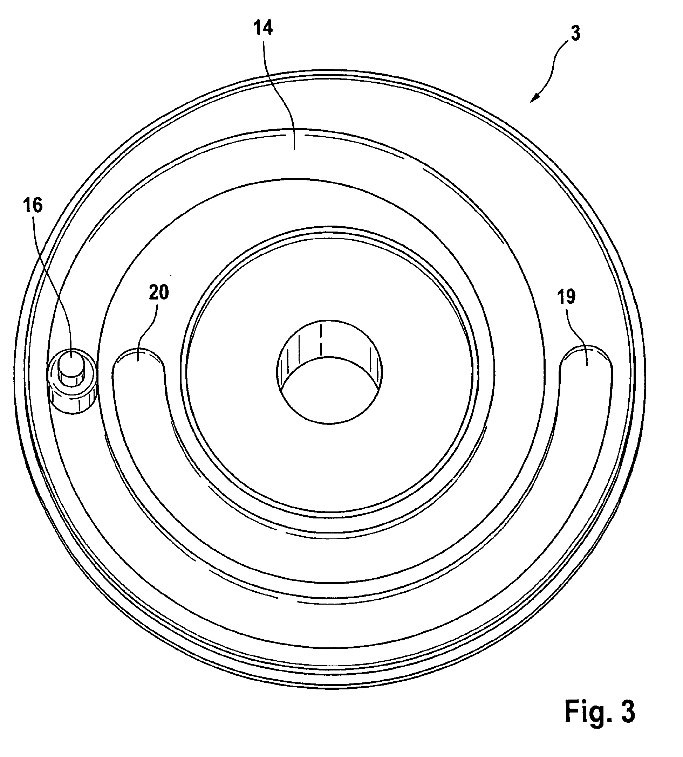

Wie insbesondere aus den Figuren 1, 1 a und 2 ersichtlich, sind der innere Lagerring 2 und der äußere Lagerring 3 außerhalb des Bereiches der beiden Schrägnadellager 4 so aufeinander abgestimmt, dass zwischen beiden eine diese trennende Ebene 13 angeordnet ist, die im Ausführungsbeispiel als ein Radialspalt ausgebildet ist, der unter einem Winkel von 90° zur Lagerachse 9 verläuft. In diesem Bereich ist die an sich bekannte Kurvensteuerung untergebracht, wobei im äußeren Lagerring 3 die Steuernut 14 eingebracht ist. Wie aus Figur 3 erkennbar, ist diese spiralförmig gestaltet und verläuft ausgehend vom Mittelpunkt des äußeren Lagerringes 3 von innen nach außen. Die zur Kurvensteuerung zugehörige Ausnehmung 15 ist im inneren Lagerring 2 angeordnet, wobei diese als ein Langloch ausgestaltet ist, das in radialer Richtung ausgerichtet ist.

Wie weiter aus den Figuren 1a und 2 erkennbar ist in der spiralförmigen Steuernut 14 und der Ausnehmung 15 ein als Gleitschuh bezeichnetes und mit dem Bezugszeichen 16 versehenes Führungselement angeordnet, dass aus der Gleitbuchse 17 und dem daraus hervorragenden Stift 18 zusammengesetzt ist. Die Gleitbuchse 17 ist dabei in der Steuernut 14 untergebracht, während der Stift 18 in der zugehörigen Ausnehmung 15 läuft. Auf diese Weise sind der innere Lagerring 2 und der äußere Lagerring 3 mit Hilfe des Führungselementes 16 formschlüssig miteinander verbunden, so dass der Drehwinkel durch die zwei Anschlagpunkte begrenzt ist. Die Anschlagpunkte begrenzen Anfang und Ende der Steuernut 14 und sind mit den Bezugszeichen 20, 19 versehen. Führungselement 16 und Steuernut 14 bzw. Ausnehmung 15 sind dabei so aufeinander abzustimmen, dass die Gleitbuchse 17 und der Stift 18 geringfügig im Durchmesser kleiner sind, so dass die Reibung verringert ist.

Wird nun der Lageraußenring 3 als feststehend angesehen, so rotiert der Lagerinnenring 2 gemäß Pfeil in Figur 2 im Uhrzeigersinn, wobei dessen Ausgangslage einerseits durch Anlage der Gleitbuchse 17 am Anschlagpunkt 19 und andererseits durch Anlage des Stiftes 18 am linksseitigen Ende der langlochartigen Ausnehmung 15 bestimmt ist. Mit fortschreitender Drehung des inneren Lagerringes 2 im Uhrzeigersinn bewegt sich der Stift 18 des Führungselementes 16 innerhalb der Ausnehmung 15 von links nach rechts, wobei die Endlage des inneren Lagerringes 2 durch Anlage der Gleitbuchse 17 am Anschlagpunkt 20 der spiralförmigen Steuernut 14 bestimmt ist.

### Bezugszeichenliste

- 1: Drehverbindung
- 2: innerer Lagerring
- 3: äußerer Lagerring
- 4: Axialschrägnadellager
- 5: Laufscheibe
- 6: Laufscheibe
- 7: Käfig
- 8: Lagernadel
- 9: Lagerachse
- 10: Drehachse
- 11: Vorsprung
- 12: Gewindering
- 13: Trennebene
- 14: Steuernut
- 15: Ausnehmung
- 16: Führungselement
- 17: Gleitbuchse
- 18: Stift
- 19: Anschlagpunkt
- 20: Anschlagpunkt
- 21: Schnittpunkt

## Patentansprüche

1. Wälzlager, insbesondere Drehverbindung (1), bestehend aus einem inneren Lagerring (2) und einem äußeren Lagerring (3), zwischen denen auf zugehörigen Laufbahnen Wälzkörper abrollen, wobei innerhalb des Wälzlagers ein Anschlagmittel zur Begrenzung von dessen Drehwinkel angeordnet ist, **dadurch gekennzeichnet, dass** das Anschlagmittel durch eine Kurvensteuerung gebildet wird, die aus einer in einem Lagerring (2, 3) angeordneten Steuernut (14) und aus einem im anderen Lagerring (3, 2) in einer Ausnehmung (15) angeordneten Führungselement (16) besteht, welches in der Steuernut (14) geführt ist.

2. Wälzlager nach Anspruch 1, **dadurch gekennzeichnet, dass** das Führungselement (16) als ein Gleitschuh ausgebildet ist, der aus einer Gleitbuchse (17) und einem daraus hervorstehenden Stift (18) besteht.

3. Wälzlager nach Anspruch 2, **dadurch gekennzeichnet, dass** die Steuernut (14) im äußeren Lagerring (3) angeordnet sowie spiralförmig ausgebildet ist und in der Steuernut (14) die Gleitbuchse (17) geführt ist.

4. Wälzlager nach Anspruch 2, **dadurch gekennzeichnet, dass** die Ausnehmung (15) im inneren Lagerring (3) angeordnet sowie als radiales Langloch ausgebildet ist und in der Ausnehmung (15) der Stift (18) geführt ist.

5. Wälzlager nach Anspruch 1, **dadurch gekennzeichnet, dass** zwischen den Lagerringen (2, 3) eine diese trennende Ebene (13) gebildet ist, in deren Bereich die Kurvensteuerung angeordnet ist.

6. Wälzlager nach Anspruch 5, **dadurch gekennzeichnet, dass** die Ebene (13) außerhalb des Laufbahnbereiches der Lagerringe (2, 3) angeordnet ist.

7. Wälzlager nach Anspruch 1, **dadurch gekennzeichnet, dass** die Wälzkörper durch Lagernadeln (8) zweier entgegengerichteter Axialschrägnadellager (4) gebildet sind, die Laufscheiben (5, 6) aufweisen, wobei ein Schnittpunkt (21) verlängerter Drehachsen (10) der Lagernadeln (8) im inneren Lagerring (2) oder im äußeren Lagerring (3) liegt.

8. Wälzlager nach Anspruch 7, **dadurch gekennzeichnet, dass** der äußere Lagerring (3) an seiner inneren Mantelfläche einen in Richtung des inneren Lagerrings (2) weisenden Vorsprung (11) besitzt, der Anlageflächen für die beiden Axialschrägnadellager (4) bildet.

9. Wälzlager nach Anspruch 8, **dadurch gekennzeichnet, dass** der innere Lagerring (2) an seiner äußeren Mantelfläche eine Ausnehmung zur Aufnahme der Axialschrägnadellager (4) aufweist, in die ein Gewindering (12) einschraubbar ist.

10. Wälzlager nach Anspruch 1, **dadurch gekennzeichnet, dass** die Lagerringe (2, 3) aus Aluminium gefertigt sind.

11. Wälzlager nach Anspruch 7, **dadurch gekennzeichnet, dass** die Laufscheiben (5, 6) der Axialschrägnadellager (4) und/oder der Stift (18) des Führungselementes (16) einem Härteprozess unterworfen sind.

12. Wälzlager nach Anspruch 1, **dadurch gekennzeichnet, dass** es in einem Deckenstativ für medizinische Geräte einsetzbar ist.

## Claims

1. Rolling bearing, in particular rotary joint (1), composed of an inner bearing ring (2) and an outer bearing ring (3) between which rolling bodies roll on associated raceways, with a stop means being arranged within the rolling bearing in order to limit the rotational angle of said rolling bearing, **characterized in that** the stop means is formed by a cam control arrangement which is composed of a control groove (14) arranged in one bearing ring (2, 3) and of a guide element (16) which is arranged in the other bearing ring (3, 2) in a recess (15) and which is guided in the control groove (14).

2. Rolling bearing according to Claim 1, **characterized in that** the guide element (16) is designed as a sliding block which is composed of a sliding sleeve (17) and a pin (18) protruding therefrom.

3. Rolling bearing according to Claim 2, **characterized in that** the control groove (14) is arranged in the outer bearing ring (3) and is of spiral-shaped design, and the sliding sleeve (17) is guided in the control groove (14).

4. Rolling bearing according to Claim 2, **characterized in that** the recess (15) is arranged in the inner bearing ring (3) and is formed as a radial slot, and the pin (18) is guided in the recess (15).

5. Rolling bearing according to Claim 1, **characterized in that** between the bearing rings (2, 3) is formed a plane (13) which divides said bearing rings and in the region of which is arranged the cam control arrangement.

6. Rolling bearing according to Claim 5, **characterized in that** the plane (13) is arranged below the raceway region of the bearing rings (2, 3).

7. Rolling bearing according to Claim 1, **characterized in that** the rolling bodies are formed by bearing needles (8) of two oppositely aligned axial angular-contact needle-roller bearings (4) which have running discs (5, 6), with a point of intersection (21) of elongated rotational axes (10) of the bearing needles (8) lying in the inner bearing ring (2) or in the outer bearing ring (3).

8. Rolling bearing according to Claim 7, **characterized in that** the outer bearing ring (3) has, on its inner lateral surface, a projection (11) which points in the direction of the inner bearing ring (2) and which forms contact surfaces for the two axial angular-contact needle-roller bearings (4).

9. Rolling bearing according to Claim 8, **characterized in that** the inner bearing ring (2) has, on its outer lateral surface, a recess for receiving the axial angular-contact needle-roller bearings (4), into which recess a threaded ring (12) can be screwed.

10. Rolling bearing according to Claim 1, **characterized in that** the bearing rings (2, 3) are produced from aluminium.

11. Rolling bearing according to Claim 7, **characterized in that** the running discs (5, 6) of the axial angular-contact needle-roller bearings (4) and/or the pin (18) of the guide element (16) are subjected to a hardening process.

12. Rolling bearing according to Claim 1, **characterized in that** it can be used in a ceiling mount for medical appliances.

## Revendications

1. Palier à roulement, en particulier connexion pivotante (1) constituée d'une bague de palier interne (2) et d'une bague de palier externe (3), entre lesquelles des corps de roulement roulent sur des pistes de roulement associées, un moyen de butée pour limiter son angle de rotation étant disposé à l'intérieur du palier à roulement, **caractérisé en ce que** le moyen de butée est formé par une commande à came, qui se compose d'une rainure de commande (14) disposée dans une bague de palier (2, 3) et d'un élément de guidage (16) disposé dans l'autre bague de palier (3, 2) dans un évidement (15), lequel élément de guidage est guidé dans la rainure de commande (14).

2. Palier à roulement selon la revendication 1, **caractérisé en ce que** l'élément de guidage (16) est réalisé sous forme de patin de glissement, qui se compose d'un manchon de glissement (17) et d'une goupille (18) saillant hors de celui-ci.

3. Palier à roulement selon la revendication 2, **caractérisé en ce que** la rainure de commande (14) est disposée dans la bague de palier externe (3) et est réalisée en forme de spirale et le manchon de glissement (17) est guidé dans la rainure de commande (14).

4. Palier à roulement selon la revendication 2, **caractérisé en ce que** l'évidement (15) est disposé dans la bague de roulement interne (3) et est réalisé sous forme de trou oblong radial et la goupille (18) est guidée dans l'évidement (15).

5. Palier à roulement selon la revendication 1, **caractérisé en ce qu'**un plan (13) est formé entre les bagues de palier (2, 3) et les sépare, la commande à came étant disposée dans la région de ce plan.

6. Palier à roulement selon la revendication 5, **caractérisé en ce que** le plan (13) est disposé en dehors de la région de la piste de roulement des bagues de palier (2, 3).

7. Palier à roulement selon la revendication 1, **caractérisé en ce que** les corps de roulement sont formés par des aiguilles de palier (8) de deux paliers à aiguilles obliques axiaux (4) opposés l'un à l'autre, qui présentent des disques de roulement (5, 6), un point d'intersection (21) d'axes de rotation prolongés (10) des aiguilles de palier (8) se situant dans la bague de palier interne (2) ou dans la bague de palier externe (3).

8. Palier à roulement selon la revendication 7, **caractérisé en ce que** la bague de palier externe (3) possède, sur sa surface d'enveloppe interne, une saillie (11) tournée dans la direction de la bague de palier interne (2), qui forme des surfaces d'appui pour les deux paliers à aiguilles obliques axiaux (4).

9. Palier à roulement selon la revendication 8, **caractérisé en ce que** la bague de palier interne (2) présente, sur sa surface d'enveloppe externe, un évidement pour recevoir les paliers à aiguilles obliques axiaux (4), dans lequel peut être vissée une bague filetée (12).

10. Palier à roulement selon la revendication 1, **caractérisé en ce que** les bagues de palier (2, 3) sont fabriquées en aluminium.

11. Palier à roulement selon la revendication 7, **caractérisé en ce que** les disques de roulement (5, 6) des paliers à aiguilles obliques axiaux (4) et/ou la goupille (18) de l'élément de guidage (16) sont soumis à un processus de trempage.

12. Palier à roulement selon la revendication 1, **caractérisé en ce qu'**il peut être inséré dans un support au plafond pour appareil médicaux.
